# EUROPEAN PATENT SPECIFICATION

(11) **EP 2 076 329 B1**
(45) Date of publication and mention of the grant of the patent: **15.06.2016**
(21) Application number: 07854195.0
(22) Date of filing: 19.10.2007
(51) Int. Cl.: B60S 3/00, A01M 7/00, A01C 23/04, B01F 15/04

(54) **MODULAR LIQUID INJECTION MIXING AND DELIVERY SYSTEM**
MODULARES FLÜSSIGKEITSMISCH- UND ABGABESYSTEM
SYSTÈME MODULAIRE DE MÉLANGE PAR INJECTION LIQUIDE ET DE FOURNITURE

(30) Priority: 23.10.2006 US 862489 P; 24.04.2007 US 913555 P
(43) Date of publication of application: 08.07.2009
(73) Proprietor: Global Agricultural Technology & Engineering, LLC, Vero Beach, FL 32967 (US)
(72) Inventor: NEWTON, John R., Vero Beach, FL 32967 (US); BROOKE, Peter J., Micco, FL 32976 (US)
(74) Representative: Valea AB
(86) International application number: PCT/US2007/081868
(87) International publication number: WO 2008/051815

(56) References cited:
- US-A1- 2005 155 984

## Description

### BACKGROUND DISCUSSION

### 1. Field of the Invention

This invention relates generally to systems for injection mixing liquid chemical concentrates with liquid diluents, and for delivering the resulting solutions, and is concerned in particular with improvements to such systems wherein injection mixing is performed on demand, by a portable modular arrangement of system components, with mix ratios and flow rates remaining constant irrespective of variations in liquid supply pressures, liquid viscosities, etc.

### 2. Description of the Prior Art

Systems for mixing chemical concentrates with water are employed currently in diverse fields, non limiting examples being the application of fertilizers, pesticides and fungicides to lawns, shrubs and the like, the use of chemical cleaning and sanitation agents in industrial installations, and the use of diluted soap and wax concentrates in car washes.

Fertilizers, pesticides, and other like chemical concentrates are conventionally premixed with water and then loaded into separate truck mounted tanks for delivery to the application sites. The tanks containing the diluted solutions typically have large capacities on the order of 3790 litres (1,000 gallons), thus requiring expensive heavy duty trucks for transport. The separate tanks each require a dedicated high pressure delivery pump, which further adds to the overall cost of the system. The efficacy of the premixed solutions often deteriorates rather quickly over time, and the dumping of any unused solution is strictly regulated and often problematical, as are accidental spills which are considered toxic, requiring expensive clean up procedures.

Smaller pest control trucks carry systems for spraying chemical solutions onto vegetation, or injecting such solutions into the ground. In most cases, these truck mounted systems inject the chemicals into water obtained from domestic supply sources at the application site, thus avoiding the need to transport large tanks of premixed solutions. The chemicals are delivered by chemical injectors, which are water driven devices with pistons serving to inject the chemical concentrate into the water stream. Chemical injectors are complex and expensive, and require annual factory rebuilding to insure that the preselected concentrate/diluent ratios are consistently delivered. Also, the flow rates and delivery pressures of systems employing chemical injectors will vary directly with variations in the flow rates and pressures of the domestic water supplies. In order to insure that pressure drops across the chemical injectors are overcome and that minimum delivery pressures are achieved, upstream booster pumps are frequently employed. However, the booster pumps only serve to augment the pressure of water delivered to the chemical injectors, and as such are ineffective in mitigating pressure and flow variations.

Another drawback with conventional truck-mounted systems stems from the fact that the system controls are typically located on consoles carried on the trucks, with application of the chemical solutions being via flexible hoses often extending over considerable distances. Each time an operator chooses to switch from one concentrate to another, he or she must return to the truck to access the appropriate control. The lost time in doing so negatively affects the overall efficiency of the application process.

In the industrial cleaning field, chemical soap concentrates and disinfectants are either delivered as concentrates to be mixed on site, or are premixed and delivered in either a fully or partially diluted form. The transport of fully or partially diluted concentrates is again inefficient, requiring large capacity truck mounted tanks and heavy duty trucks.

On site dilution at dispensing locations remains problematical, due to the reliance on venturi-type proportioners to achieve the desired mix rations. Venturis are notoriously unreliable because their mix ratios will vary in response to changes in input water pressure as well as variations in downstream restrictions and the height differential between the venturi and the level of concentrate being drawn into the diluent water stream.

Typical car wash installations have at least three and often as many as ten mixing units. Chemical injectors or venturi-type proportioners draw the soap and wax concentrates from small storage drums for mixture with a water diluent. The resulting solutions are delivered to holding tanks where they are stored pending subsequent spray application to vehicles. In the typical mixing units, the pressure of the water supply is elevated by booster pumps and then reduced and regulated to maintain line pressures at optimum levels for the chemical injectors or proportioners.

The holding tanks and booster pumps contribute disadvantageously to the overall cost of the mixing units, and the chemical injectors and proportioners suffer from the drawbacks outlined above.

US2005/0155984 relates to an apparatus for delivering a non-carbonated bevarage mixture comprising a manifold having a mixing chamber. A first constant flow valve is in communication with a first inlet orifice and a second constant flow valve is in communication with a second inlet orifice.

### SUMMARY OF THE INVENTION

In accordance with the present invention, a liquid diluent, typically water, is fed to a mixing chamber via a constant flow valve and a metering orifice. One or more liquid chemical concentrates are also fed to the mixing chamber via respective constant flow valves and metering orifices. The constant flow valves (hereinafter referred to as "CFValves") are of the type described in U.S. Patent Nos. 6,026,850 and 6,209,578.

CFValves are normally closed, are opened by feed pressures above a selected threshold level, and when open, serve to deliver fluid at a constant pressure and flow rate, irrespective of variations in the feed pressure above the threshold level. The CFValves thus serve in concert with their respective metering orifices to supply the mixing chamber with both the diluent water and the selected chemical concentrates at selected ratios that remain constant. The metering orifices may be fixed or of the adjustable type, and preferably are coupled with flow meters to visually display flow rates.

The system components are arranged in a compact portable module that can readily be carried on light weight vehicles, with controls that can be operated remotely, thus enabling an operator to change from one solution to another without having to return to the vehicle to access a centrally located control panel.

These and other features and advantages of the present invention will now be described in further detail with reference to the accompanying drawing, wherein:

### BRIEF DESCRIPTION OF THE DRAWINGS

Figure 1 depicts a system in accordance with the present invention carried on a vehicle and in the course of being employed in the application of a chemical solution, e.g., a diluted fertilizer or the like;
Figure 2 diagrammatically depicts the fluid mixing and delivery components of the system;
Figure 3 diagrammatically depicts the system's remotely operable controls;
Figure 4 is a diagrammatic illustration of a system in accordance with the present invention of the type useful in a car wash installation; and
Figure 5 is a sectional view taken along line 5-5 of Figure 4.

### DETAILED DESCRIPTION

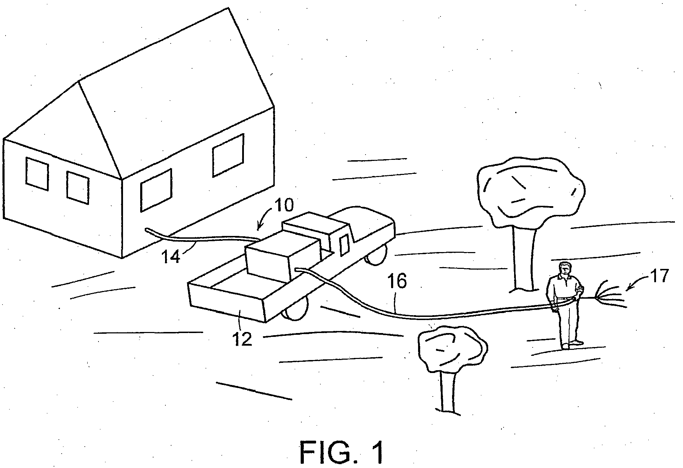

With reference initially to Figure 1, a modular liquid injection mixing and delivery system in accordance with the present invention is generally depicted at 10. The system is carried on a vehicle, e.g., a light weight pickup truck 12, which can be driven to any selected site. A liquid diluent, e.g., water, is drawn via a flexible hose 14 from a domestic source, and the resulting chemical solution is delivered via a flexible hose 16 to a nozzle 17 for application to locations remote from the truck.

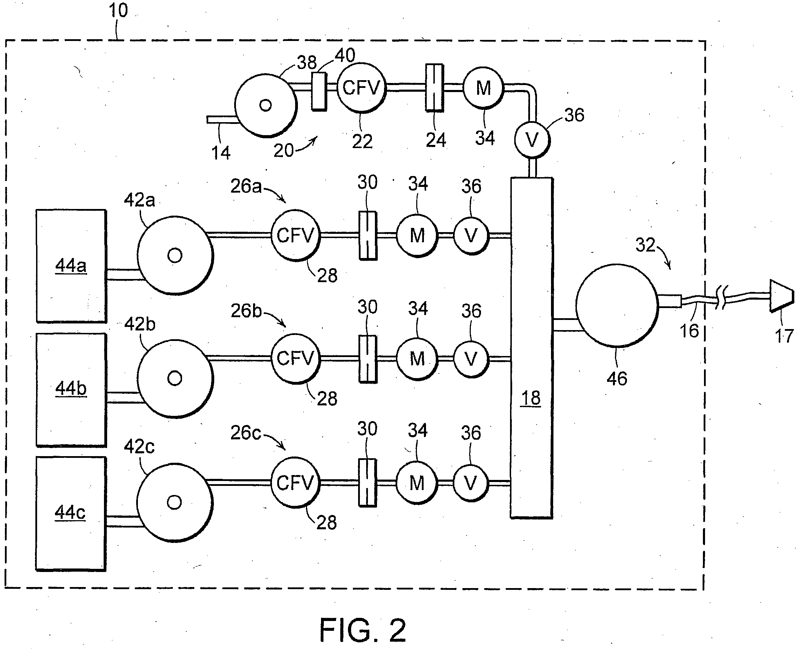

As shown in Figure 2, the system 10 includes a mixing chamber 18; a first supply line 20 for supplying the water diluent via a first CFValve 22 and a first downstream metering orifice 24 to the mixing chamber; at least one and preferably a plurality of second supply lines 26a, 26b, and 26c for supplying liquid concentrates via second CFValves 28 and second metering orifices 30 to the mixing chamber for combination with the water diluent to produce a liquid solution; and a discharge line 32 communicating with the mixing chamber and through which the liquid solution is discharged from the mixing chamber via the flexible hose 16 to the nozzle 17.

Preferably, the first and second supply lines 20, 26_{a-c} additionally include flow meters 34 and check valves 36 interposed between the respective first and second metering orifices 24, 30 and the mixing chamber 18. The metering orifices may be fixed or of the adjustable type. The check valves serve to prevent reverse flow of the liquid solution from the mixing chamber into the first and second supply lines.

The first supply line 20 preferably also includes a first booster pump 38 operating through a pressure switch 40 to deliver the water diluent from hose 14 to the first CFValve 22 at an elevated pressure.

The second supply lines 26_{a-c} include concentrate pumps 42a, 42b, 42c for drawing the liquid concentrated from respective containers 44a, 44b, and 44c.

A second booster pump 46 serves to elevate the pressure at which the liquid solution is discharged via hose 16 to the nozzle 17.

All of the above-described system components are combined in a compact portable assembly that can be conveniently mounted on the truck 12. The concentrate containers 44_{a-c} may be relatively small, e.g., with capacities on the order of 19-38 litres (5-10 gallons) and there is no need to transport the water diluent. Thus, the entire system can be carried by relatively light weight vehicles, e.g., ½ ton pickups or the like.

The solutions are mixed on demand, thus eliminating problems associated with disposal of unused mixtures, and diminishing efficacy as a result of prolonged storage. Mix ratios remain constant, irrespective of variations in the pressures of the water and concentrate supplies. Liquids are combined in the mixing chamber at relatively low pressures, and thus the concentrate pumps 42_{a-c} can be relatively small and inexpensive. The difficulties associated with prior art chemical injectors and proportioners are completely eliminated by the CFValves acting in concert with their respective metering orifices.

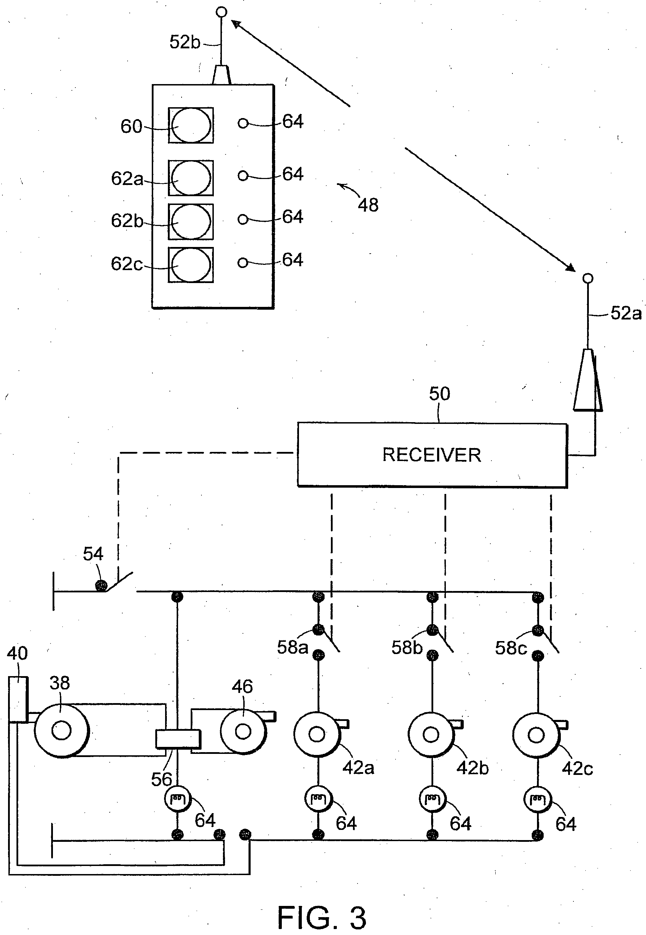

With reference to Figure 3, the first and second booster pumps 38, 46 and the concentrate pumps 42_{a-c} may be operated by a remote control 48 operating in concert with a receiver 50 via radio frequency antennae 52a, 52b. The receiver may, for example, be a rolling code encoder/decoder system such as the TRC 1300 MARKSTAR available from Texas Instruments. The receiver is wired to a normally open master control switch 54 supplying power via relay 56 to the first and second booster pumps 38, 46, and via normally open switches 58_{a-c} to the concentrate pumps 42_{a-c}. The remote control 48 includes control button 60 which operates master control switch 54, and buttons 62_{a-c} which respectively operate switches 58_{a-c}.

The receiver 50 is located with other system components on the vehicle 12, and the remote control 48 is portable and operable from remote application sites.

Indicator lamps 64 on a centrally location control panel and on the remote controller 48 provide a visual indication of various system settings.

Thus, by way of example, activating button 60 will close master switch 54 and energize pumps 38 and 46, resulting in an initial output of diluent water from the mixing chamber 18 via hose 16. Activating button 62a will close switch 58a. If pressure switch 40 is closed by the delivery pressure of pump 38, the circuit is closed and concentrate from container 48a is supplied to the mixing chamber 18, with the resulting solution being delivered by pump 46 via hose 16. However, if diluent water is not being delivered by pump 38a, switch 40 will remain open, and the concentrate pump 42a will remain deactivated.

It is also possible to activate multiple pump control buttons in order to deliver a chemical solution consisting of the diluent and more than one chemical concentrate. Thus, for example, by activating buttons 62b and 62c, a solution containing concentrates from both containers 44b and 44c can be applied simultaneously.

Delivery of concentrate from container 44a to the mixing chamber 18 can be terminated by again depressing button 62a on the remote control 48. The pumps 38 and 46 can remain in operation to flush the system with diluent water, after which another of the buttons 62_{b-c} can be depressed to commence application of a different chemical solution, or button 60 can be depressed to shut the system down.

All of this can be accomplished from a location remote from the vehicle carrying the mixing and delivery components of the system. Thus, with the portable remote control in hand, an operator can change from one concentrate to another without returning to the vehicle.

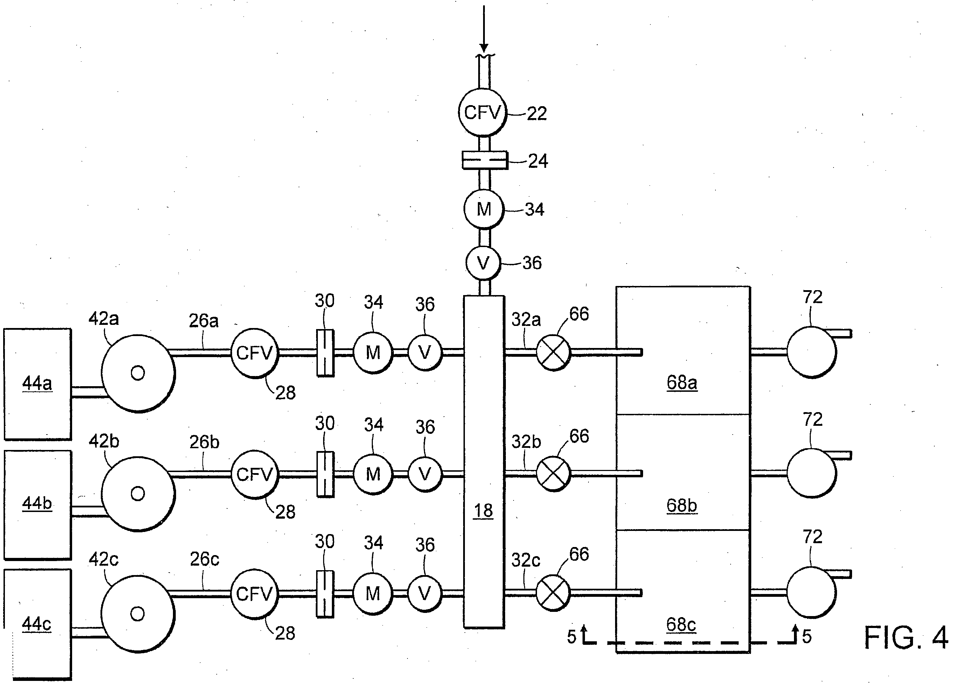

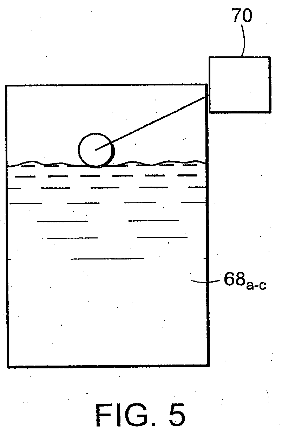

Systems in accordance with the present invention are also useful for the on site mixing of chemical soaps and disinfectant concentrates with a water diluent for delivery into storage tanks at various industrial applications. For example, Figures 4 and 5 diagrammatically depict a system in accordance with the present invention for use in a car wash installation. The soap and wax concentrates are in the containers 44_{a-c}, and the mixing chamber 18 is provided with multiple outlets 32_{a-c}, each having a solenoid controlled shut off valve 66. Each outlet leads to a respective storage tank 68_{a-c}. By selectively operating the pumps 42_{a-c} and shut off valves 66, the tanks 68_{a-c} can be filled with the appropriate solution.

As shown in Figure 5, each tank is provided with a float actuated switch 70 which can be used to control selective actuation of the concentrate pumps 42_{a-c} and the valves 66. Pumps 72 draw mixtures from the respective tanks 68_{a-c} for spray application to vehicles.

Here again, the CFValves 22, 28 and associated metering orifices 24, 30 act in concert to deliver constant flows at selected rates, thus avoiding the drawbacks associated with prior art chemical injectors and proportioners. By mixing the concentrates on demand, holding tanks are eliminated as are booster pumps to elevate the pressure of the diluent water. Thus, in comparison to prior art car wash systems, the present invention provides a simpler, less expensive, and more efficient and reliable system. The components may preferably by fabricated of corrosion resistant materials, e.g., stainless steel, in order to withstand the corrosive effect of the chemical concentrates.

## Claims

1. A modular liquid injection mixing and delivery system (10) comprising a mixing chamber (18), a first supply line (20) for supplying a liquid diluent via a first constant flow valve (22) and a first downstream metering orifice (24) to said mixing chamber (18), at least one second supply line (26a) for supplying a liquid concentrate via a second constant flow valve (28) and a second downstream metering orifice (30) to said mixing chamber (18) for combination with said liquid diluent to produce a liquid solution, and a discharge line (32) communicating with said mixing chamber (18) and through which said liquid solution is discharged from said mixing chamber (18), **characterized in that** said system (10) is arranged in a compact portable assembly that can be carried on a vehicle (12), with flow meters (34) interposed in said first and second supply lines (20, 26a) between the respective first and second metering orifices (24, 30) and said mixing chamber (18).

2. The system of claim 1 wherein check valves (36) are interposed in said first and second supply lines (20, 26a) between the respective first and second metering orifices (24, 30) and said mixing chamber (18), said check valves (36) being operative to prevent reverse flow of said liquid solution from said mixing chamber (18) into said first and second supply lines (20, 26a).

3. The system of claim 1 wherein said second supply line (26a) further comprises a concentrate pump (42a) for delivering liquid concentrate at an elevated pressure to said second constant flow valve (28).

4. The system of claim 3 wherein the liquid concentrate is drawn by said concentrate pump from a concentrate container (44a).

5. The system of claim 1 wherein said portable assembly further comprises a first booster pump (38) for elevating the pressure at which said liquid diluent is supplied to said first constant flow valve (22).

6. The system of claim 5 wherein said portable assembly further comprises a second booster pump (46) for elevating the pressure at which the liquid solution is discharged via said discharge line to a remote applicator (17).

7. The system of claim 6 wherein said remote applicator is connected to said booster pump (46) via a flexible hose (16).

8. The system of claim 4 wherein a plurality of said second supply lines (26a, 26b, 26c) and associated second constant flow valves (28) and second metering orifices (34) are arranged to supply different liquid concentrates to said mixing chamber (18), the concentrate pumps (42a, 42b, 42c) of said second supply lines (26a, 26b, 26c) being selectively operable to produce different liquid solutions.

9. The system of claims 3 and 6 wherein said first and second booster pumps (38, 46) and said concentrate pumps (42a, 42b, 42c) are selectively operable from locations remote from said vehicle (12).

10. The system of claim 9 wherein said selective operation is effected by a portable remote control (48) operating in concert via radio frequency antennae (52a, 52b) with a receiver (50) carried by said vehicle (12).

11. The system of claim 10 wherein said receiver (50) is wired to a control network comprising a normally open first switch (54) for energizing said first and second booster pumps (38, 46), and normally open second switches (58a, 58b, 58c) for energizing said concentrate pumps (42a, 42b, 42c).

## Patentansprüche

1. Ein modulares Flüssigkeitseinspritz-Misch- und Liefersystem (10), das eine Mischkammer (18), eine erste Lieferleitung (20) zur Lieferung eines flüssigen Verdünnungsmittels über ein erstes konstantes Durchflussventil (22) und eine erste, zur besagten Mischkammer (18) stromabwärts angeordnete Messblende (24), mindestens eine zweite Lieferleitung (26a) zur Lieferung eines flüssigen Konzentrats über ein zweites konstantes Durchflussventil (28) und eine zweite, zur besagten Mischkammer (18) stromabwärts [angeordnete] Messblende (30) zur Kombination mit besagtem flüssigen Verdünnungsmittel zwecks Herstellung einer flüssigen Lösung, sowie eine Entladeleitung (32) umfasst, welche mit besagter Mischkammer (18) kommuniziert und durch welche die besagte flüssige Lösung aus der besagten Mischkammer (18) entladen wird, **dadurch gekennzeichnet, dass** besagtes System (10) in einem kompakten tragbaren Aufbau angeordnet ist, der mit in erster und zweiter Lieferleitungen (20, 26a) zwischen der entsprechenden ersten und zweiten Messblenden (24, 30) und besagter Mischkammer (18) eingefügten Durchflussmessern (34)auf einem Fahrzeug (12) getragen werden kann,.

2. Das System gemäß Anspruch 1, **dadurch gekennzeichnet, dass** in den besagten ersten und zweiten Lieferleitungen (20, 26a) zwischen besagten ersten und zweiten Messblenden (24, 30) und besagter Mischkammer (18) Rückschlagventile (36) eingefügt werden, wobei besagte Rückschlagventile (36) die besagte flüssige Lösung daran hindern, aus besagter Mischkammer (18) in die ersten und zweiten Lieferleitungen (20, 26a) zurückzufließen.

3. Das System gemäß Anspruch 1, **dadurch gekennzeichnet, dass** besagte zweite Lieferleitung (26a) darüber hinaus eine Konzentratpumpe (42a) umfasst, um flüssiges Konzentrat unter hohem Druck an besagtes zweites konstantes Durchflussventil (28) zu liefern.

4. Das System gemäß Anspruch 3, **dadurch gekennzeichnet, dass** das flüssige Konzentrat von der besagten Konzentratpumpe aus einem Konzentratbehälter (44a) gezogen wird.

5. Das System gemäß Anspruch 1, **dadurch gekennzeichnet, dass** besagter tragbarer Aufbau darüber hinaus eine erste Druckerhöhungspumpe (38) zur Erhöhung des Drucks umfasst, mit welchem besagtes flüssiges Verdünnungsmittel an das erste konstante Durchflussventil (22) geliefert wird.

6. Das System gemäß Anspruch 5, **dadurch gekennzeichnet, dass** besagter tragbarer Aufbau darüber hinaus eine zweite Druckerhöhungspumpe (46) zur Erhöhung des Drucks umfasst, mit welchem besagte flüssige Lösung über besagte Entladeleitung an ein entferntes Applikationsgerät (17) geliefert wird.

7. Das System gemäß Anspruch 6, **dadurch gekennzeichnet, dass** besagtes entferntes Applikationsgerät über einen flexiblen Schlauch (16) an die besagte Druckerhöhungspumpe (46) angeschlossen ist.

8. Das System gemäß Anspruch 4, **dadurch gekennzeichnet, dass** eine Vielzahl der besagten Lieferleitungen (26a, 26b, 26c) und assoziierte konstante Durchflussventile (28) und zweite Messblenden (34) so angeordnet sind, dass sie verschiedene flüssige Konzentrate in die Mischkammer (18) verbringen, wobei die Konzentratpumpen (42a, 42b, 42c) besagter zweiten Lieferleitungen (26a, 26b, 26c) selektiv betrieben werden können, um verschiedene flüssige Lösungen zu produzieren.

9. Das System aus den Ansprüchen 3 und 6, **dadurch gekennzeichnet, dass** besagte erste und zweite Druckerhöhungspumpen (38, 46) und besagte Konzentratpumpen (42a, 42b, 42c) selektiv ab Orten betrieben werden können, die von besagtem Fahrzeug (12) entfernt sind.

10. Das System gemäß Anspruch 9, **dadurch gekennzeichnet, dass** besagter selektiver Betrieb durch eine tragbare Fernbedienung (48) durchgeführt wird, welche über eine Radiofrequenzantenne (52a, 52b) gemeinsam mit einem Empfänger (50) agiert, der von besagtem Fahrzeug (12) getragen wird.

11. Das System gemäß Anspruch 10, **dadurch gekennzeichnet, dass** besagter Empfänger (50) mit einem Steuernetzwerk verkabelt ist, welches einen normal offenen ersten Schalter (54), der die besagten ersten und zweiten Druckerhöhungspumpen (38, 46) mit Energie versorgt, sowie normal offene zweite Schalter (58a, 58b, 58c) zur Energieversorgung der besagten Konzentratpumpen (42a, 42b, 42c) umfasst.

## Revendications

1. Système modulaire de mélange et de délivrance d'injection liquide (10) comprenant une chambre de mélange (18), une première conduite d'alimentation (20) pour fournir un diluant liquide via une première vanne à flux constant (22) et un premier orifice de dosage aval (24) à ladite chambre de mélange (18), au moins une seconde conduite d'alimentation (26a) pour fournir un concentré liquide via une seconde vanne à flux constant (28) et un second orifice de dosage aval (30) à ladite chambre de mélange (18) pour combinaison avec ledit diluant liquide pour produire une solution liquide, et une conduite de décharge (32) communiquant avec ladite chambre de mélange (18) et à travers laquelle ladite solution liquide est déchargée de ladite chambre de mélange (18), **caractérisé en ce que** (10) ledit système est agencé dans un ensemble portatif compact qui peut être transporté sur un véhicule (12), avec des débitmètres (34) interposés dans lesdites première et seconde conduites d'alimentation (20, 26a) entre les premier et second orifices de dosage respectifs (24, 30) et ladite chambre de mélange (18).

2. Système selon la revendication 1, dans lequel des clapets de non-retour (36) sont interposés dans lesdites première et seconde conduites d'alimentation (20, 26a) entre les premier et second orifices de dosage respectifs (24, 30) et ladite chambre de mélange (18), lesdits clapets de non-retour (36) étant opérationnels pour empêcher le flux inverse de ladite solution liquide provenant de ladite chambre de mélange (18) dans lesdites première et seconde conduites d'alimentation (20, 26a).

3. Système selon la revendication 1, dans lequel ladite seconde conduite d'alimentation (26a) comprend en outre une pompe de concentré (42a) pour délivrer du concentré liquide à une pression élevée à la seconde vanne à flux constant (28).

4. Système selon la revendication 3, dans lequel le concentré liquide est tiré par ladite pompe de concentré depuis un conteneur de concentré (44a).

5. Système selon la revendication 1, dans lequel ledit ensemble portatif comprend en outre une première pompe de charge (38) pour élever la pression à laquelle ledit diluant liquide est fourni à ladite première vanne à flux constant (22).

6. Système selon la revendication 5, dans lequel ledit ensemble portatif comprend en outre une seconde pompe de charge (46) pour élever la pression à laquelle la solution liquide est déchargée via ladite conduite de décharge vers un applicateur distant (17).

7. Système selon la revendication 6, dans lequel ledit applicateur distant est relié à ladite pompe de charge (46) via un tuyau souple (16).

8. Système selon la revendication 4, dans lequel une pluralité de dites secondes conduites d'alimentation (26a, 26b, 26c) et de secondes vannes à flux constant associées (28) et de seconds orifices de dosage (34) sont agencés pour fournir différents concentrés liquides à ladite chambre de mélange (18), les pompes de concentré (42a, 42b, 42c) desdites secondes conduites d'alimentation (26a, 26b, 26c) pouvant être mises en oeuvre de manière sélective pour produire des solutions liquides différentes.

9. Système selon les revendications 3 et 6, dans lequel lesdites première et seconde pompes de charge (38, 46) et lesdites pompes de concentré (42a, 42b, 42c) peuvent être mises en oeuvre de manière sélective à partir d'emplacements distants dudit véhicule (12).

10. Système selon la revendication 9, dans lequel ladite mise en oeuvre sélective est effectuée par une télécommande portative (48) fonctionnant de concert via des antennes radiofréquence (52a, 52b) avec un récepteur (50) transporté par ledit véhicule (12).

11. Système selon la revendication 10, dans lequel ledit récepteur (50) est câblé pour un réseau de commande comprenant un premier commutateur normalement ouvert (54) pour exciter lesdites première et seconde pompes de charge (38, 46), et des seconds commutateurs normalement ouverts (58a, 58b, 58c) pour exciter lesdites pompes de concentré (42a, 42b, 42c).
